# EUROPÄISCHE PATENTANMELDUNG

(11) **EP 2 703 142 A1**
(43) Veröffentlichungstag der Anmeldung: **05.03.2014**
(21) Anmeldenummer: 12182131.8
(22) Anmeldetag: 29.08.2012
(51) Int. Cl.: B29C 44/00, B29C 44/02, B29C 44/56, B29C 47/12, B29C 47/88, B29C 47/90, C08J 9/00, C08J 9/36, B29C 44/60, B29C 47/00

(54) **Thermoplastische Schaumstoffplatte mit reduziertem thermisch induziertem Verzug**

(71) Anmelder: BASF SE, 67056 Ludwigshafen (DE)
(72) Erfinder: Scherzer, Dietrich, 67433 Neustadt (DE); Hahn, Klaus, 67281 Kirchheim (DE); Hahn, Christoph, 67435 Neustadt (DE); Diehlmann, Tim, 67269 Grünstadt (DE); Merkel, Peter, 67308 Zellertal (DE); Dietzen, Franz-Josef, Dr., 67454 Haßloch (DE); Sandner, Carsten, 67098 Bad Dürkheim (DE); Schroeder, Cathrin, 68305 Mannheim (DE)
(74) Vertreter: Ellwanger, Arndt

(57) **Zusammenfassung**

Die vorliegende Erfindung betrifft thermoplastische Extrusionsschaumstoffplatten, die einen reduzierten thermisch induzierten Verzug aufweisen. Weiterhin betrifft die vorliegende Erfindung mehrere Verfahren zur Herstellung von solchen thermoplastischen Extrusionsschaumstoffplatten mit einem reduzierten thermisch induzierten Verzug.

## Beschreibung

Die vorliegende Erfindung betrifft thermoplastische Extrusionsschaumstoffplatten, die einen reduzierten thermisch induzierten Verzug aufweisen. Weiterhin betrifft die vorliegende Erfindung mehrere Verfahren zur Herstellung von solchen thermoplastischen Extrusionsschaumstoffplatten mit einem reduzierten thermisch induzierten Verzug.

Ein häufig auftretendes Problem bei thermoplastischen Extrusionsschaumstoffplatten ist deren Anfälligkeit für eine nachträgliche Verformung infolge von Temperaturänderungen. Diese Verformungen werden auch als "Aufschüsseln" oder "thermisch induzierter Verzug" bezeichnet. Ursache für den thermisch induzierten Verzug von thermoplastischen Extrusionsschaumstoffplatten sind Inhomogenitäten in der Plattenstruktur, die zu unterschiedlichen Spannungen auf den jeweiligen Plattenseiten bei Temperaturänderungen, insbesondere beim Erwärmen, führen. Aufgrund dieser Temperaturänderungen wird, insbesondere beim Erwärmen, ein Verziehen bzw. Verformen der thermoplastischen Extrusionsschaumstoffplatte festgestellt.

Bei einer kontinuierlichen Extrusion tritt der extrudierte thermoplastische Schaumstoff aus dem Extruder durch die Extrusionsdüse aus und wird in der Regel mit Hilfe eines Kalibrierwerkzeuges in Form gebracht bzw. bearbeitet. Beispielsweise aufgrund der Einwirkung der Schwerkraft beim Austritt des thermoplastischen Schaumstoffs aus der Extrusionsdüse entstehen bei der kontinuierlichen Extrusion in den dabei erzeugten thermoplastischen Extrusionsschaumstoffplatten Bereiche von unterschiedlicher Dichte und somit Inhomogenitäten in der Plattenstruktur. Diese Bereiche von unterschiedlicher Dichte oder "eingefrorenen Spannungen" sind letztendlich für den thermisch induzierten Verzug bei Temperaturänderungen verantwortlich. Ausgelöst werden diese Dichteunterschiede beispielsweise durch unterschiedliche Schaumstruktur infolge der Schwerkraft an den Außenseiten der Platten, durch unterschiedliche Abkühlgeschwindigkeiten der Plattenaußenseiten oder durch verschiedene Ausrichtungen der extrudierten Polymere an den Plattenaußenseiten. Durch eine Temperaturänderung kommt es zum Verzug der Form der thermoplastischen Extrusionsschaumstoffplatten, sofern diese Dichteunterschiede aufgrund beispielsweise einem der oben genannten Auslösungsfaktoren aufweisen. Bereiche mit einer hohen Dichte weisen eine hohe thermisch induzierte Spannung auf und verformen sich bei Temperaturerhöhung entsprechend stärker als Bereiche mit einer niedrigeren Dichte, die für eine geringere thermisch induzierte Spannung stehen.

Die Herstellung von thermoplastischen Extrusionsschaumstoffplatten durch kontinuierliche Extrusion von thermoplastischen Polymeren ist bereits seit längerem bekannt. Die grundlegenden Verfahrensschritte für die Herstellung von beispielsweise einem extrudierten Polystyrol-Schaumstoff (XPS) werden unter anderem in "Polystyrol, Kunststoffhandbuch 4" [H. Gausepohl u. R. Gellert, Hanser-Verlag München (1996] unter Kapitel 13.2.3 (S. 591-598) offenbart. Um Produkte (wie thermoplastische Extrusionsschaumstoffplatten oder Folien) mit gleichmäßigen Eigenschaften zu erhalten, wird eine Homogenisierung der Schmelze beispielsweise durch den Einsatz von statischen oder dynamischen Mischern vor der Düse, also im Extruder, durchgeführt. Das Aufschüsseln der thermoplastischen Extrusionsschaumstoffplatten infolge von Wärmeeinwirkung kann durch diese Maßnahmen jedoch nicht unterbunden werden.

EP-A 2 420 531 offenbart Extrusionsschaumstoffe auf Basis eines Polymers wie Polystyrol, indem mindestens ein mineralischer Füllstoff mit einer Partikelgröße ≤ 10 µm und mindestens ein Keimbildner enthalten sind. Diese Extrusionsschaumstoffe können auch in Form von Schaumstoffplatten vorliegen. Aufgrund der gleichzeitigen Zugabe des mineralischen Füllstoffs mit einer speziellen Partikelgröße und mindestens eines Keimbildners auf Basis eines Wachses oder eines Oligomeren weisen die Extrusionsschaumstoffe gemäß EP-A 2 420 531 eine verbesserte Steifigkeit auf. Das Problem des Aufschüsselns von thermoplastischen Extrusionsschaumstoffplatten durch Wärmeeinwirkung, also des thermisch induzierten Verzuges, wird in EP-A 2 420 531 jedoch nicht umrissen.

Die der vorliegenden Erfindung zugrunde liegende Aufgabe besteht in der Bereitstellung von thermoplastischen Schaumstoffplatten, die eine höhere thermische Stabilität aufweisen.

Gelöst wird die Aufgabe durch eine thermoplastische Extrusionsschaumstoffplatte, die dadurch gekennzeichnet ist, dass der thermisch induzierte Verzug bezogen auf die Dicke der thermoplastischen Extrusionsschaumstoffplatte ≤ 1,5 mm ist, sowie durch die entsprechenden Herstellungsverfahren dieser erfindungsgemäßen thermoplastischen Extrusionsschaumstoffplatten.

Die erfindungsgemäßen thermoplastischen Extrusionsschaumstoffplatten zeichnen sich dadurch aus, dass sie kein Aufschüsseln oder nur ein Aufschüsseln in einem reduziertem Maße infolge von Wärmeeinwirkung zeigen. In anderen Worten ausgedrückt bedeutet dies, dass die erfindungsgemäßen thermoplastischen Extrusionsschaumstoffplatten vorzugsweise keinen oder nur einen reduzierten thermisch induzierten Verzug aufweisen. Weiterhin sind die erfindungsgemäßen thermoplastischen Extrusionsschaumstoffplatten auch lagerstabil.

Die erfindungsgemäßen thermoplastischen Extrusionsschaumstoffplatten können nach unterschiedlichen Verfahren hergestellt werden, im nachfolgenden Text sind insgesamt fünf unterschiedliche Verfahren aufgeführt, die gegebenenfalls auch miteinander kombiniert werden können. Durch sämtliche Verfahren werden - wenn auch auf unterschiedliche Weise - die bei einem kontinuierlichen Extrusionsverfahren entstehenden Inhomogenitäten innerhalb der einzelnen Plattenbereiche, die insbesondere durch Asymmetrie, Temperaturunterschiede oder aufgrund der Schwerkraft beim Austritt des extrudierten thermoplastischen Schaumstoffs aus der Extrusionsdüse entstehen, beseitigt. Durch die einzelnen Verfahren werden die Spannungen, die bei konventionell durchgeführten kontinuierlichen Extrusionsverfahren in den jeweiligen Schaumstoffplatten eingefroren sind, beseitigt. Folglich zeigen die erfindungsgemäßen thermoplastischen Extrusionsschaumstoffplatten bei einer Wärmebehandlung keinen oder nur einen deutlich reduzierten thermisch induzierten Verzug, wobei die maximale Verformung ≤ 1,5 mm (bezogen auf die jeweilige Dicke der thermoplastischen Schaumstoffplatte (in z-Richtung) ist.

Nachfolgend wird die erfindungsgemäße thermoplastische Extrusionsschaumstoffplatte, die einen reduzierten, thermisch induzierten Verzug aufweist, sowie die entsprechenden Herstellungsverfahren einer solchen erfindungsgemäßen thermoplastischen Extrusionsschaumstoffplatte näher definiert.

Die thermoplastische Extrusionsschaumstoffplatte als solche wird durch Extrusion, insbesondere kontinuierliche Extrusion eines thermoplastischen Polymers hergestellt. Kontinuierliche Extrusionsverfahren von thermoplastischen Polymeren sind, wie vorstehend bereits ausgeführt, seit langem bekannt und unter anderem in besagtem "Polystyrol, Kunststoffhandbuch 4" beispielsweise unter Kapitel 13.2.3 bereits beschrieben. Weitere Ausführungen zur Durchführung einer solchen Extrusion, insbesondere einer kontinuierlichen Extrusion, sind im nachfolgenden Text im Zusammenhang mit den entsprechenden Herstellungsverfahren der erfindungsgemäßen thermoplastischen Extrusionsschaumstoffplatten beschrieben.

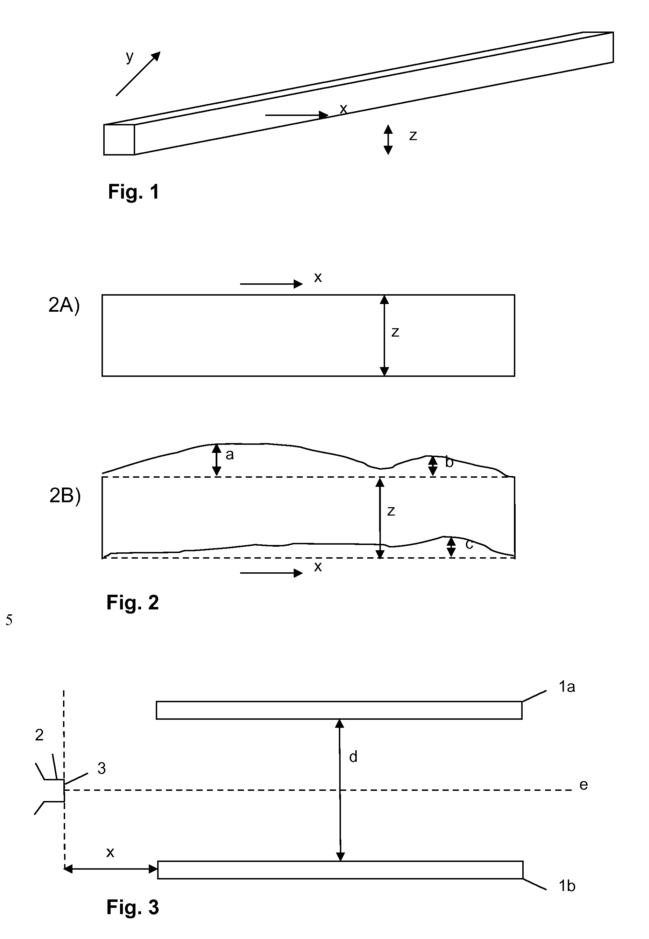

Die thermoplastischen Extrusionsschaumstoffplatten können beliebig dimensioniert sein. Erfindungsgemäß ist der thermisch induzierte Verzug bezogen auf die Dicke der thermoplastischen Extrusionsschaumstoffplatten ≤ 1,5 mm. Erfindungsgemäß ist die Dicke als die z-Richtung definiert, die zusammen mit der x-Richtung und der y-Richtung in einem rechtwinkligen Koordinatensystem die Dimensionierung der erfindungsgemäßen thermoplastischen Extrusionsschaumstoffplatten festlegen. Unter der x-Richtung wird erfindungsgemäß die Länge der thermoplastischen Extrusionsschaumstoffplatten und unter der y-Richtung die Breite dieser Platten verstanden. Die Länge (x-Richtung) gibt die Extrusionsrichtung bei der kontinuierlichen Extrusion wieder. Erfindungsgemäß ist die Länge der thermoplastischen Extrusionsschaumstoffplatten immer größer als die Breite und die Dicke. Vorzugsweise ist bei den erfindungsgemäßen thermoplastischen Extrusionsschaumstoffplatten die Länge (x-Richtung) größer als die Breite (y-Richtung), und die Breite wiederum ist größer als die Dicke (z-Richtung). Die räumliche Anordnung von Länge, Breite und Dicke der erfindungsgemäßen thermoplastischen Extrusionsschaumstoffplatten ist in Figur 1 illustriert.

Vorzugsweise ist die Dicke der thermoplastischen Extrusionsschaumstoffplatten im Bereich von 40 bis 400 mm, besonders bevorzugt im Bereich von 80 bis 150 mm. Weiterhin ist es bevorzugt, dass die Breite der thermoplastischen Extrusionsschaumstoffplatten im Bereich von 0,3 bis 1,2 m, mehr bevorzugt im Bereich von 0,5 bis 0,8 m, insbesondere 0,6 m, ist. Die Länge der erfindungsgemäßen thermoplastischen Schaumstoffplatten ist vorzugsweise 0,5 bis 2,5 m, mehr bevorzugt 0,9 bis 1,5 m, insbesondere 1,2 m.

In einer bevorzugten Ausführungsform der vorliegenden Erfindung weist die thermoplastische Schaumstoffplatte eine Dicke von 40 bis 400 mm, eine Breite von 0,3 bis 1,2 m und eine Länge von 0,5 bis 2,50 m aufweist, wobei die Länge größer als die Breite und die Breite größer als die Dicke ist.

Der thermisch induzierte Verzug (auch als Verformung oder Aufschüsseln bezeichnet) wird erfindungsgemäß auf die Dicke der thermoplastischen Extrusionsschaumstoffplatten (z-Richtung) bezogen, die vorzugsweise die kleinste der drei Raumrichtungen ist. Erfindungsgemäß ist der thermisch induzierte Verzug ≤ 1,5 mm, bevorzugt < 1,0 mm, mehr bevorzugt < 0,5 mm, insbesondere tritt gar kein thermisch induzierter Verzug auf. Unter dem Begriff "kein thermisch induzierter Verzug" wird erfindungsgemäß eine Verformung in z-Richtung von 0 bis maximal 0,1 mm verstanden.

Der thermisch induzierte Verzug wird in Figur 2 verdeutlicht, wobei in Figur 2A die Seitenansicht einer thermoplastischen Extrusionsschaumstoffplatte vor einer Wärmeeinwirkung zu sehen ist. In Figur 2B ist dieselbe thermoplastische Extrusionsschaumstoffplatte dargestellt, nachdem diese einer Wärmequelle ausgesetzt gewesen ist. Aufgrund von Temperaturänderungen (Wärmebehandlung) ist eine Aufwölbung (Verformung in z-Richtung) festzustellen. Die (maximale) Ausdehnung bzw. der Verzug (Aufwölbung) in z-Richtung ist in Figur 2B durch die Strecke a dargestellt. Die gestrichelten Linien geben die Form der thermoplastischen Extrusionsschaumstoffplatte vor der Wärmebehandlung wieder. Die Strecken b und c zeigen ebenfalls Stellen auf, an denen eine Aufwölbung stattgefunden hat, allerdings in etwas geringerem Maße im Vergleich zu der Stelle, die auf die Strecke a definiert ist.

Erfindungsgemäß wird der thermisch induzierte Verzug bestimmt, indem die entsprechende thermoplastische Extrusionsschaumstoffplatte für einen Zeitraum von 10 bis 20 Stunden bei maximal 80 °C gelagert wird. Vorzugsweise erfolgt die Messung maximal 72 Stunden nach der Herstellung und wird für 12 Stunden bei 60 °C durchgeführt. Die erfindungsgemäßen thermoplastischen Extrusionsschaumstoffplatten weisen infolge der vorstehend beschriebenen Wärmebehandlung eine maximale Abweichung von 1,5 mm in z-Richtung (Dicke) auf, also die Strecke a in Figur 2B. Weiterhin ist es bevorzugt, dass die erfindungsgemäßen thermoplastischen Extrusionsschaumstoffplatten für einen Zeitraum von mindestens einer Woche einen konstanten thermisch induzierten Verzug von ≤ 1,5 mm aufweisen. Die Messung der konkreten Werte des thermisch induzierten Verzuges kann auf einfache Weise unter Verwendung einer flach auf die entsprechende Oberfläche aufgelegten Messlatte erfolgen, gegebenenfalls können auch Abweichungen unter Zuhilfenahme eines Mikroskopes bestimmt werden.

Erfindungsgemäß kann jedes beliebige, dem Fachmann bekannte thermoplastische Polymer eingesetzt werden, das sich zur Herstellung von thermoplastischen Schaumstoffplatten durch Extrusion, insbesondere kontinuierliche Extrusion, eignet. Solche thermoplastischen Polymere werden nachfolgend auch als zur Extrusion verwendete Polymere bezeichnet und werden vorzugsweise in Form von Pellets (Linsen) oder Granulaten (Stangen) eingesetzt. Das zur Extrusion verwendete Polymer ist vorzugsweise ein Polystyrol oder aus Styrol hergestelltes Copolymer. Gegebenenfalls können auch Gemische aus solchen Polymeren eingesetzt werden. Besonders bevorzugt enthält die erfindungsgemäße thermoplastische Extrusionsschaumstoffplatte extrudiertes Polystyrol (XPS), das beispielsweise unter der Bezeichnung Styrodur® von der BASF SE kommerziell erhältlich ist.

Sofern das zur Extrusion verwendete Polymer (mindestens) ein aus Styrol hergestellten Copolymer ist (auch als Styrolcopolymerisate bezeichnet), bedeutet dies, dass zur Herstellung dieses Copolymeren neben dem Monomeren Styrol mindestens ein weiteres Monomer erforderlich ist. Vorzugsweise wird dieses Copolymer aus Styrol und einem weiteren Monomeren hergestellt. Als Comonomere von Styrol eignen sich prinzipiell alle mit Styrol polymerisierbaren Monomere. Vorzugsweise sind mindestens 50 Gew.-% Styrol in diesem Copolymer einpolymerisiert.

Vorzugsweise weist ein aus Styrol hergestelltes Copolymer als Comonomer zu Styrol ein Monomer auf, das ausgewählt ist aus α-Methylstyrol, kernhalogenierten Styrolen, kernalkylierten Styrolen, Acrylnitril, Acrylsäureester, Methacrylsäureester, N-Vinylverbindungen, Maleinsäureanhydrid, Butadien, Divinylbenzol oder Butandioldiacrylat. Acrylsäureester sowie Methacrylsäureester sind vorzugsweise erhältlich aus Alkoholen mit 1 bis 8 Kohlenstoffatomen. Eine geeignete N-Vinylverbindung ist beispielsweise Vinylcarbazol. Bevorzugte aus Styrol hergestellte Copolymere sind Styrol-Acrylnitril-Copolymere (SAN) oder Acrylnitril-Butadien-Styrol-Copolymere (ABS).

Erfindungsgemäß können in dem zur Extrusion verwendeten Polymer und somit auch in der thermoplastischen Extrusionsschaumstoffplatte weitere Komponenten enthalten sein. Diese weiteren Komponenten werden dem zur Extrusion verwendeten Polymer vorzugsweise vor der kontinuierlichen Extrusion zur Herstellung der thermoplastischen Extrusionsschaumstoffplatte zugegeben, so dass diese weiteren Komponenten homogen in der erfindungsgemäßen thermoplastischen Schaumstoffplatte verteilt sind. Geeignete weitere Komponenten, die einzeln oder in Form von Gemischen eingesetzt werden können, sind beispielsweise Füllstoffe, Keimbildner, Flammschutzmittel, Absorber von elektromagnetischer Strahlung oder sonstige Zusatz- und/oder Hilfsstoffe in Form von Antistatika, Stabilisatoren oder Farbstoffen. Gegebenenfalls können in den erfindungsgemäßen thermoplastischen Extrusionsschaumstoffplatten auch Spuren von bei der Extrusion eingesetzten Treibmitteln enthalten sein.

Sofern in den zur Extrusion verwendeten Polymeren bzw. in den erfindungsgemäßen thermoplastischen Extrusionsschaumstoffplatten ein Füllstoff enthalten ist, handelt es sich dabei vorzugsweise um mindestens einen mineralischen Füllstoff, insbesondere um einen mineralischen Füllstoff mit einer Partikelgröße ≤ 10 µm. Gegebenenfalls können diese Füllstoffe aber auch kugel- oder faserförmig sein. Diese Füllstoffe werden oft auch als Nukleierungsmittel bezeichnet, weil sie Auswirkung auf Zellzahlen und Zellwanddicken der Extrusionsschaumstoffe haben können.

Geeignete mineralische Füllstoffe sind Talk, Talkum, Kreide, Kaolin, Metalloxide, Metallhydroxide wie Aluminiumhydroxid oder Magnesiumhydroxid, Aluminiumnitrid, Silikate, Aluminiumsilikate, Bariumsulfat, Calciumcarbonat, Calciumsulfat, Kieselsäure, Quarzmehl, Aerosil, Tonerde oder Wollastonit. Bevorzugte Silikate sind Schichtsilikate wie beispielsweise Montmorillonite. Gegebenenfalls können die mineralischen Füllstoffe auch in gecoateter Form vorliegen. Ein bevorzugtes Beispiel für einen gecoateten Füllstoff ist natürlicher Montmorillonit, der mit quartären Ammoniumverbindungen modifiziert ist.

Beispiele für kommerziell erhältliche mineralische Füllstoffe sind Montmorillonite wie Cloisite^{®} 30B der Fa. Southern Clay Products oder das Talkum Microtalk IT Extra der Fa. Mondo Minerals (Amsterdam).

Bevorzugt als mineralische Füllstoffe ist ein Talkum, ein Metalloxid oder ein Silikat. Vorzugsweise beträgt die Partikelgröße des mineralischen Füllstoffs in den erfindungsgemäßen Extrusionsschaumstoffen 10 nm bis 8 µm, insbesondere 50 nm bis 6 µm. Im Rahmen der vorliegenden Erfindung sind die Partikelgrößen als durchschnittliche Partikelgrößen angegeben (D₅₀-Wert).

Weiterhin können die zur Extrusion verwendeten Polymere bzw. die erfindungsgemäßen thermoplastischen Extrusionsschaumstoffplatten mindestens einen Keimbildner auf Basis eines Wachses oder eines Oligomeren enthalten. Solche Keimbildner, die auch als reaktive Compatibilizer bezeichnet werden, sind dem Fachmann bekannt. Geeignete Keimbildner sind beispielsweise die kommerziell erhältlichen Produkte der Reihe Luwax (Polyethylenwachse) oder Joncryl (epoxygruppenhaltige Oligomere) der BASF SE, Ludwigshafen. Bei den Wachsen kann es sich um reine oder modifizierte Polyethylenwachse, beispielsweise Oxidate oder Copolymerisate sowie gegebenenfalls Montanwachse und Polyetherwachse handeln. Die Polyethylenwachse werden in der Regel in einem Hochdruckverfahren hergestellt. Sie sind als Mikronisat, als Pulver, als Granulat, als Schuppen oder Pastillen erhältlich. Bei den Oligomeren kann es sich um Styrolacrylatharzlösungen, Styrolglycidylacrylate, filmbildende RC-Dispersionen oder Kolloidalacrylate handeln. Bevorzugter Keimbildner ist ein Polyethylenwachs oder ein epoxygruppenhaltiges Oligomer.

Weiterhin kann in den zur Extrusion verwendeten Polymeren bzw. in den erfindungsgemäßen thermoplastischen Extrusionsschaumstoffplatten auch mindestens ein Flammschutzmittel enthalten sein. Flammschutzmittel als solche sind dem Fachmann bekannt. Bevorzugte Flammschutzmittel im Rahmen der vorliegenden Erfindung sind ausgewählt aus einem Phosphat, einem Phosphit, einem Phosphonat, einem Polyphosphonat, Melamin, einem Metalloxidhydrat, insbesondere einem Aluminiumoxidhydrat oder einer halogenierten organischen Verbindung.

Bevorzugte Phosphate und Phosphonate sind ausgewählt aus DMMP (Dimethymethylphosphonat), DMPP (Dimethylpropylphosphonat), TCEP (Tris(chlorethyl)phosphat), TCPP (Tris(chlorpropyl)phosphat), TDCPP (Tris(dichlorisopropyl)phosphat), TPP (Triphenylphosphat), TEHP (Tris-(2-ethylhexyl)phosphat), TKP (Trikresylphosphat) oder TCEP (Trichlorpropylphosphat).

Bevorzugte halogenierte organische Verbindungen sind bromhaltige organische Verbindungen, besonders bevorzugt sind HBCD (Hexabromcyclododekan) oder bromierte Polystyrole. Bromierte Polystyrole sind kommerziell erhältlich, beispielsweise von Emerald, Fa. Great Lakes.

Weiterhin kann in den zur Extrusion verwendeten Polymeren bzw. in den erfindungsgemäßen thermoplastischen Extrusionsschaumstoffplatten auch mindestens ein Absorber für elektromagnetische Strahlung enthalten sein, vorzugsweise ein Infrarot (IR)-Absorber. Bevorzugte IR-Absorber sind Ruß, Metallpulver, z.B. Aluminiumpulver, Titandioxid oder Graphit, mehr bevorzugt Ruß oder Graphit, insbesondere Graphit.

In einer Ausführungsform der vorliegenden Erfindung enthält das zur Extrusion verwendeten Polymer bzw. die erfindungsgemäßen thermoplastischen Extrusionsschaumstoffplatten zusätzlich mindestens eine Komponente ausgewählt aus einem mineralischen Füllstoff, einem Keimbildner, einem Flammschutzmittel oder einem IR-Absorber.

Mehr bevorzugt enthält das zur Extrusion verwendete Polymer bzw. die erfindungsgemäßen thermoplastischen Extrusionsschaumstoffplatten mindestens einen IR-Absorber, insbesondere Graphit.

Sofern im Rahmen der vorliegenden Erfindung im zur Extrusion verwendeten Polymer zusätzliche Komponenten wie ein mineralischer Füllstoff oder ein IR-Absorber enthalten sind, sind diese Komponenten vorzugsweise jeweils zu 0,5 bis 5 Gew.-%, insbesondere zu 0,5 bis 1 Gew.-%, im zur Extrusion verwendeten Polymer (bezogen auf dessen Gesamtgewicht) enthalten. Dabei beläuft sich die Summe aller Komponenten vorzugsweise auf maximal 10 Gew.-% des eingesetzten thermoplastischen Schaumstoffs.

Die thermoplastischen Extrusionsschaumstoffplatten der vorliegenden Erfindung weisen vorzugsweise eine Dichte < 200 g/l auf, mehr bevorzugt eine Dichte von < 100 g/l auf. Weiterhin ist es bevorzugt, dass die erfindungsgemäßen thermoplastischen Extrusionsschaumstoffplatten eine homogene Dichte aufweisen. Unter dem Begriff "homogene Dichte" der thermoplastischen Extrusionsschaumstoffplatten wird im Rahmen der vorliegenden Erfindung verstanden, dass die entsprechende thermoplastische Extrusionsschaumstoffplatte über den gesamten Plattenkörper, insbesondere an der Plattenoberseite im Vergleich zur entsprechenden Plattenunterseite, eine homogene Dichte aufweist. Dies wird auch als "homogene Dichteverteilung" bezeichnet. Vorzugsweise weisen die Plattenunterseite und die entsprechende Plattenoberseite exakt die gleiche Dichte auf, Abweichungen von bis zu 5 %, vorzugsweise bis zu 2 % der entsprechenden Dichtewerte werden im Rahmen der vorliegenden Erfindung auch als homogene Dichteverteilung aufgefasst.

In einer Ausführungsform der vorliegenden Erfindung weisen die Plattenunterseite und die Plattenoberseite der thermoplastischen Extrusionsschaumstoffplatte jeweils in einem Abstand von maximal 100 mm Vertiefungen auf, wobei die Vertiefungen eine Tiefe von maximal 2 mm haben. Die Plattenunterseite und die Plattenoberseite der thermoplastischen Extrusionsschaumstoffplatte wird im Rahmen der vorliegenden Erfindung von den beiden flächenmäßig größten Seiten der entsprechenden Platte gebildet. Wie in Figur 1 illustriert, werden diese beiden Seiten jeweils durch die Flächen definiert, die über die x-Richtung und die y-Richtung festgelegt werden.

Die Vertiefungen, die auch als Einschnitte bezeichnet werden können, können über die Plattenunterseite und die Plattenoberseite in unterschiedlichen Abständen verteilt sein, vorzugsweise weisen die Vertiefungen auf der Plattenunterseite und der Plattenoberseite die gleichen Abstände zueinander auf, d.h. sie sind symmetrisch auf der Plattenunterseite zu der Plattenoberseite angebracht. Die Vertiefungen können punktförmig oder linienförmig sein, beispielsweise in Form von zu einer Linie angeordneten Punkten oder einer durchgezogenen Linie, vorzugsweise sind die Vertiefungen in der y-Richtung der entsprechenden Plattenseite ausgerichtet. Die Vertiefungen werden mit dem Fachmann bekannten Verfahren auf die Plattenober- bzw. die Plattenunterseite aufgebracht, vorzugsweise durch Einschneiden. Der Mindestabstand zwischen den einzelnen Vertiefungen (in x-Richtung) ist vorzugsweise 20 mm, mehr bevorzugt sind die Vertiefungen in einem Abstand von 40 bis 60 mm, insbesondere in einem Abstand von 50 mm zueinander angebracht. Die Vertiefungen haben vorzugsweise eine Mindesttiefe von 0,1 mm, mehr bevorzugt haben die Vertiefungen eine (durchschnittliche) Tiefe von 0,2 bis 1,0 mm, insbesondere eine Tiefe von 0,2- 0,6 mm. Die Breite einer Vertiefung, beispielsweise der Durchmesser eines Punktes (bei einer punktförmigen Vertiefung) oder die Breite einer Linie (bei einer linienförmigen Vertiefung) kann beliebig sein, vorzugsweise ist sie im Bereich von 0,01 bis 25 mm, insbesondere 0,05 bis 1 mm. Die vorstehend beschriebenen Abstände zwischen den einzelnen Vertiefungen (in x-Richtung) werden jeweils ausgehend von den sich gegenüberliegenden Rändern der einzelnen Vertiefungen bestimmt.

Ein weiterer Gegenstand der vorliegenden Erfindung sind mehrere Verfahren zur Herstellung der vorstehend beschriebenen thermoplastischen Extrusionsschaumstoffplatten. Wie vorstehend bereits ausgeführt, ist die Durchführung einer Extrusion, insbesondere einer kontinuierlichen Extrusion (als solcher) von thermoplastischen Polymeren unter Erhalt einer thermoplastischen (Extrusions-) Schaumstoffplatte dem Fachmann bekannt. Bei einem kontinuierlichen Extrusionsverfahren wird in der Regel mindestens ein Extruder, vorzugsweise ein Aufschmelzextruder und ein Kühlextruder, eingesetzt. Vorzugsweise werden in den Aufschmelzextruder die zu extrudierenden Komponenten zugegeben, dies kann an unterschiedlichen Stellen des entsprechenden Extruders erfolgen. In der Regel werden am Extruderanfang die entsprechenden thermoplastischen Polymere zugegeben und zu einem späteren Zeitpunkt im Bereich des Extruders weitere Additive wie Füllstoffe, Flammschutzmittel oder Absorber sowie gegebenenfalls ein Treibmittel. Vom Aufschmelzextruder werden die zu extrudierenden Komponenten vorzugsweise in einen Kühlextruder überführt, an dessen Ende sich eine Extrusionsdüse befindet. Aus dieser Extrusionsdüse wird das extrudierte Material in ein Kalibrierwerkzeug überführt, wo letztendlich die thermoplastische Extrusionsschaumstoffplatte aus dem extrudierten Material geformt wird. Dem Kalibrierwerkzeug können noch ein Rollenabzug sowie eine Kühlstrecke und ein Transportband zur weiteren Plattenbearbeitung nachgeschaltet sein.

In einem ersten Verfahren zur Herstellung der erfindungsgemäßen thermoplastischen Extrusionsschaumstoffplatten sind bei der Extrusion die Extrusionsdüse und das Kalibrierwerkzeug zentralsymmetrisch zueinander angeordnet. Vorzugsweise wird dieses erste Extrusionsverfahren kontinuierlich durchgeführt.

Dieses Verfahren ist in der Figur 3 verdeutlicht. In Figur 3 ist das Ende eines Extruders (2), vorzugsweise ein Kühlextruder, dargestellt, an dem sich die Extrusionsdüse (3) befindet. Das Kalibrierwerkzeug (1), das eine Oberseite (1a) und eine Unterseite (1 b) aufweist, ist vorzugsweise ein Plattenkalibrator (Plattenbock). Die Extrusionsdüse und das Kalibrierwerkzeug sind in einem Abstand x zueinander angebracht, vorzugsweise beträgt dieser Abstand 20 cm bis 2 m. Die beiden Seiten des Kalibrierwerkzeugs ((1a) und (1b)) sind in einem Abstand d von vorzugsweise 40 bis 400 mm zueinander angebracht, vorzugsweise handelt es sich dabei um die beiden Platten eines Plattenkalibrators.

Die zentralsymmetrische Anordnung der Extrusionsdüse zum Kalibrierwerkzeug bedeutet, dass die Mitte der Extrusionsdüse genau auf Höhe der Mitte des Abstands d angeordnet ist. Dies ist in Figur 3 durch die gestrichelte Linie e verdeutlicht. Die Abweichung der gestrichelten Linie e von der Mitte der Strecke d darf maximal 5 Prozent der Länge der Strecke d betragen. Bei einem Abstand d von 100 mm muss die Extrusionsdüse folglich auf der Höhe von 50 mm (d/2) angeordnet sein (exakt zentralsymmetrisch) oder mit einer Abweichung von ± 5 mm. In einer bevorzugten Ausführungsform ist das Kalibrierwerkzeug ein Plattenkalibrator und die Abweichung des Plattenkalibrators zur Mitte der Extrusionsdüse beträgt ≤ 0,5 mm. In diesem ersten Verfahren zur Herstellung der erfindungsgemäßen thermoplastischen Extrusionsschaumstoffplatten können auch ein oder mehrere Parameter der nachfolgend beschriebenen weiteren Verfahren zur Herstellung der erfindungsgemäßen thermoplastischen Extrusionsschaumstoffplatten erfüllt sein.

In einem zweiten Verfahren zur Herstellung der erfindungsgemäßen thermoplastischen Extrusionsschaumstoffplatten beträgt bei der Extrusion die Temperaturdifferenz der Plattenunterseite und der Plattenoberseite der thermoplastischen Extrusionsschaumstoffplatte nach Verlassen des Kalibrierwerkzeugs, vorzugsweise des Plattenkalibrators, ≤ 2 °C. Bei diesem Verfahren wird die Temperaturdifferenz der Plattenunterseite und der Plattenoberseite der thermoplastischen Extrusionsschaumstoffplatte über die Temperatur des Kalibrierwerkzeugs, vorzugsweise des Plattenkalibrators, gesteuert. Dies bedeutet, dass das Kalibrierwerkzeug temperiert wird. Vorzugsweise beträgt die Temperatur des Kalibrierwerkzeugs 50 bis 150°C, vorzugsweise 60 bis 120°C. Weiterhin können in diesem zweiten Verfahren zur Herstellung der erfindungsgemäßen Schaumstoffplatten auch ein oder mehrere Parameter der anderen Verfahren zur Herstellung der erfindungsgemäßen thermoplastischen Extrusionsschaumstoffplatten erfüllt sein. Vorzugsweise wird dieses zweite Extrusionsverfahren kontinuierlich durchgeführt.

In einem dritten Verfahren zur Herstellung der erfindungsgemäßen thermoplastischen Extrusionsschaumstoffplatten werden bei oder nach der Extrusion die Plattenunterseite und die Plattenoberseite der thermoplastischen Extrusionsschaumstoffplatte jeweils in einem Abstand von maximal 100 mm mit Vertiefungen, die eine Tiefe von maximal 2 mm haben, versehen. Die Vertiefungen werden vorzugsweise durch Einschneiden der entsprechenden Plattenunter- sowie Plattenoberseite erhalten, gegebenenfalls kann dies auch durch Fräsen erzielt werden. Die Vertiefungen können daher während des Extrusionsverfahrens auf die entsprechenden Plattenseiten aufgebracht werden, beispielsweise bei der Plattenkalibrierung oder in einer dem Kalibrierwerkzeug nachgeschalteten Vorrichtung. Gegebenenfalls können diese Vertiefungen aber auch erst in einem gewissen zeitlichen Abstand zum eigentlichen Herstellungsverfahren auf die jeweiligen Plattenseiten angebracht werden. Vorzugsweise werden die Vertiefungen bei oder im unmittelbaren Anschluss an die kontinuierliche Extrusion auf den entsprechenden Plattenseiten der thermoplastischen Extrusionsschaumstoffplatten angebracht. Vorzugsweise wird dieses dritte Extrusionsverfahren kontinuierlich durchgeführt.

Weiterhin können in diesem dritten Verfahren zur Herstellung der erfindungsgemäßen Extrusionsschaumstoffplatten auch ein oder mehrere Parameter der anderen Verfahren zur Herstellung der erfindungsgemäßen thermoplastischen Extrusionsschaumstoffplatten erfüllt sein.

In einem vierten Verfahren zur Herstellung der erfindungsgemäßen thermoplastischen Extrusionsschaumstoffplatten wird nach der Extrusion die thermoplastische Extrusionsschaumstoffplatte in einem beheizten Tunnel für einen Zeitraum von 0,1 bis 10 Minuten, vorzugsweise für 1 bis 5 Minuten, bei 85 bis 105 °C, vorzugsweise bei 90 bis 100 °C, getempert. Das Tempern der thermoplastischen Extrusionsschaumstoffplatten wird in diesem Verfahren nach vollständiger Beendigung der Extrusion durchgeführt, vorzugsweise direkt im Anschluss an den eigentlichen Extrusionsprozess.

Vorzugsweise erfolgt das Tempern im beheizten Tunnel durch Verwendung von Wasserdampf oder Heißluft, insbesondere von Wasserdampf. Vorzugsweise wird dieses vierte Extrusionsverfahren kontinuierlich durchgeführt.

Weiterhin können in diesem vierten Verfahren zur Herstellung der erfindungsgemäßen Extrusionsschaumstoffplatten auch ein oder mehrere Parameter der anderen Verfahren zur Herstellung der erfindungsgemäßen thermoplastischen Extrusionsschaumstoffplatten erfüllt sein.

In einem fünften Verfahren zur Herstellung der erfindungsgemäßen thermoplastischen Extrusionsschaumstoffplatten wird nach der Extrusion die thermoplastische Extrusionsschaumstoffplatte von mindestens einem IR-Strahler durch Bestrahlung für einen Zeitraum von 0,1 bis 5 Minuten, vorzugsweise für 0,5 bis 2 Minuten, bei 90 bis 115 °C, vorzugsweise bei 95 bis 105 °C, getempert. Das Tempern der thermoplastischen Extrusionsschaumstoffplatten wird in diesem Verfahren nach vollständiger Beendigung der Extrusion durchgeführt, vorzugsweise direkt im Anschluss an den eigentlichen Extrusionsprozess. Vorzugsweise wird dieses fünfte Extrusionsverfahren kontinuierlich durchgeführt.

Vorzugsweise wird dieses Verfahren so durchgeführt, dass die Plattenoberseite der thermoplastischen Extrusionsschaumstoffplatte von einem ersten IR-Strahler und die Plattenunterseite der thermoplastischen Extrusionsschaumstoffplatte von einem zweiten IR-Strahler synchron getempert werden.

Weiterhin können in diesem fünften Verfahren zur Herstellung der erfindungsgemäßen Extrusionsschaumstoffplatten auch ein oder mehrere Parameter der anderen Verfahren zur Herstellung der erfindungsgemäßen thermoplastischen Extrusionsschaumstoffplatten erfüllt sein.

Vorzugsweise werden die erfindungsgemäßen thermoplastischen Extrusionsschaumstoffplatten hergestellt, indem bei der kontinuierlichen Extrusion die Extrusionsdüse und das Kalibrierwerkzeug zentralsymmetrisch zueinander angeordnet sind (erstes Verfahren), gleichzeitig das Kalibrierwerkzeug exakt temperiert ist (zweites Verfahren) und eine anschließende Temperung der fertiggestellten thermoplastischen Extrusionsschaumstoffplatten in einem beheizten Tunnel (viertes Verfahren) oder mittels mindestens einem IR-Strahler (fünftes Verfahren) erfolgt. Gegebenenfalls können die Plattenunterseite und die Plattenoberseite der thermoplastischen Extrusionsschaumstoffplatten auch mit Vertiefungen versehen sein (drittes Verfahren).

Nachfolgend wird die Erfindung anhand von Beispielen verdeutlicht:
Die thermoplastischen Extrusionsschaumstoffplatten ("Platten") werden in einem kontinuierlichen Extrusionsverfahren hergestellt, wie es in "Polystyrol, Kunststoffhandbuch 4" [H. Gausepohl u. R. Gellert, Hanser-Verlag München (1996] unter Kapitel 13.2.3 (S. 591-598), insbesondere in Bild 13.24, oben, beschreiben ist.
Die Platten (Styrodur 3035 CS, Dichte 35 g/l, Dicke 50 mm, Größe (Länge x Breite) 120 x 60 cm²) werden nach der Schaumextrusion 48 Std. bei Raumtemperatur und dann für 12 Std. bei 60 °C in einem Trockenschrank gelagert. Die Verformung (thermisch induzierter Verzug) wird unmittelbar nach der Wärmelagerung und nach einwöchiger Lagerung gemessen. Die Verformung wird als maximale Abweichung gegenüber einer flach aufgelegten Messlatte bestimmt.

Die Temperaturdifferenz der Platte (Oberseite zu Unterseite) beim Ausgang aus dem Plattenkalibrator (Kalibrierwerkzeug) wird mittels kontaktlosen IR-Thermometern bestimmt. Als IR-Strahlungsquelle wird M85 Infrarot Module der Firma Heraeus für mittelwellige Strahlung verwendet.

**Tabelle 1:**

| Beispiel | Maßnahme | Max. Verformung nach Wärmelagerung (mm) | Max. Verformung nach 7 Tagen (mm) |
|---|---|---|---|
| 1 | Plattenkalibrator zentralsymmetrisch zur Düsenmitte angeordnet (Abweichung 0,3 mm) | 1,1 | 1,0 |
| 2 (Vgl.) | Plattenkalibrator zentralsymmetrisch zur Düsenmitte angeordnet (Abweichung 2,5 mm) | 2,2 | 3,1 |
| 3 | Plattenkalibrator exakt temperiert, Temperaturdifferenz Platte nach Plattenkalibrator 1,5 °C | 1,3 | 0,9 |
| 4 (Vgl.) | Plattenkalibrator nicht exakt temperiert, Temperaturdifferenz Platte nach Plattenkalibrator 8 °C | 2,6 | 3,7 |
| 5 | Plattenhaut auf Tiefe 1 mm alle 50 mm eingeschnitten, ansonsten analog Beispiel 1 | 0,8 | 1,2 |
| 6 | Plattenhaut auf Tiefe 1 mm alle 50 mm eingeschnitten, ansonsten analog Beispiel 3 | 1,2 | 1,1 |
| 7 | Plattenkalibrator nicht exakt auf Düsenmitte zentriert (Abweichung 2,5 mm), und Temperaturdifferenz Platte nach Plattenkalibrator 8°C, Plattenhaut auf Tiefe von 1 mm alle 50 mm eingeschnitten | 1,4 | 1,3 |
| 8 (Vgl.) | Platten werden in einem beheizten Tunnel 5 Minuten nach Herstellung für 10 Minuten bei 70°C getempert | 2,7 | 3,5 |
| 9 (Vgl.) | Platten werden in einem beheizten Tunnel 5 Minuten nach Herstellung für 10 Minuten bei 80°C getempert | 2,4 | 3,0 |
| 10 | Platten werden in einem beheizten Tunnel 5 Minuten nach Herstellung für 10 Minuten bei 90°C getempert | 1,3 | 0,8 |
| 11 | Platten werden in einem beheizten Tunnel 5 Minuten nach Herstellung für 10 Minuten bei 100°C getempert | 1,4 | 0,8 |
| 12 (Vgl.) | Platten werden in einem beheizten Tunnel 5 Minuten nach Herstellung für 10 Minuten bei 110°C getempert | 2,4 | 3,7 |
| 13 (Vgl.) | Platten werden in einem beheizten Tunnel 5 Minuten nach Herstellung für 10 Minuten bei 120°C getempert | Oberfläche geschädigt | 5,0 |
| 14 (Vgl.) | Platten werden von zwei IR-Strahlern von oben und unten 5 Minuten nach Herstellung für 2 Minuten bei 75 °C getempert. Die Oberflächentemperatur wird kontaktlos mittels IR-Thermometer bestimmt. | 2,2 | 4,6 |
| 15 (Vgl.) | Platten werden von zwei IR-Strahlern von oben und unten 5 Minuten nach Herstellung für 2 Minuten bei 85 °C getempert. Die Oberflächentemperatur wird kontaktlos mittels IR-Thermometer bestimmt. | 1,9 | 1,4 |
| 16 | Platten werden von zwei IR-Strahlern von oben und unten 5 Minuten nach Herstellung für 2 Minuten bei 95 °C getempert. Die Oberflächentemperatur wird kontaktlos mittels IR-Thermometer bestimmt. | 0,9 | 0,81 |
| 17 | Platten werden von zwei IR-Strahlern von oben und unten 5 Minuten nach Herstellung für 2 Minuten bei 105 °C getempert. Die Oberflächentemperatur wird kontaktlos mittels IR-Thermometer bestimmt. | 1,2 | 0,9 |
| 18 (Vgl.) | Platten werden von zwei IR-Strahlern von oben und unten 5 Minuten nach Herstellung für 2 Minuten bei 115 °C getempert. Die Oberflächentemperatur wird kontaktlos mittels IR-Thermometer bestimmt. | Oberfläche geschädigt | 5,5 |
| 19 (Vgl.) | Platten werden von zwei IR-Strahlern von oben und unten 5 Minuten nach Herstellung für 2 Minuten bei 125 °C getempert. Die Oberflächentemperatur wird kontaktlos mittels IR-Thermometer bestimmt. | Oberfläche geschädigt | 5,9 |

| | | | |
|---|---|---|---|
| Vgl.: Vergleichsbeispiel | | | |

Die vorstehenden Versuche gemäß Tabelle 1 zeigen, dass die erfindungsgemäßen thermoplastischen Extrusionsschaumstoffplatten mit einem reduzierten thermisch induzierten Verzug nach verschiedenen Verfahren hergestellt werden können. Als erfindungsgemäß gelten diejenigen thermoplastischen Schaumstoffplatten, die eine maximale Verformungen ≤ 1,5 mm (thermisch induzierter Verzug) nach einer - im Anschluss an die Plattenherstellung durchgeführten - Wärmelagerung aufweisen. Darüber hinaus kommt es auch in Folge der Wärmelagerung zu keiner thermischen Schädigung der Plattenoberfläche (Extrusionshaut), sondern die Plattenoberfläche ist sowohl vor als auch nach der Wärmelagerung gleichbleibend glatt. Bei den erfindungsgemäßen thermoplastischen Extrusionsschaumstoffplatten wird zudem auch nach einer mindestens 1-wöchigen Lagerung keine Überschreitung des vorgenannten Verformungsgrenzwertes von 1,5 mm beobachtet.

Der Vergleich von Ausführungsbeispiel 1 mit Vergleichsbeispiel 2 zeigt auf, dass eine zentralsymmetrische Anordnung von Extrusionsdüse und Kalibrierwerkzeug zu einer Aufrechterhaltung der reduzierten Verformung auch nach 1-wöchiger Lagerung führt. Dieser Vergleich zeigt weiterhin, dass eine Abweichung von ≤ 0,5 mm (konkret: 0,3 mm) zur exakt zentralsymmetrischen Anordnung erfindungsgemäß ist. In beiden Beispielen ist der Plattenkalibrator nicht exakt temperiert, das heißt die Temperaturdifferenz der Plattenunterseite und der Plattenoberseite ist nach Verlassen des Plattenkalibrators 6 °C.

Der Vergleich von Ausführungsbeispiel 3 und Vergleichsbeispiel 4 zeigt wiederum auf, dass eine exakte Temperierung des Plattenkalibrators, wodurch eine Temperaturdifferenz von Plattenunterseite und Plattenoberseite nach Verlassen des Plattenkalibrators vorn ≤ 2 °C erzielt wird, ebenfalls zu einer Aufrechterhaltung der reduzierten Verformung nach 1-wöchiger Lagerung führt. Bei diesen beiden Versuchen ist wiederum der Plattenkalibrator nicht exakt auf die Düsenmitte zentriert (Abweichung 2,5 mm).

Die drei Ausführungsbeispiele 5 bis 7 zeigen wiederum, dass die thermoplastischen Extrusionsschaumstoffplatten, die sowohl auf der Plattenoberseite als auch auf der Plattenunterseite durch Einschneiden erzeugte Vertiefungen aufweisen, ebenfalls den reduzierten thermisch induzierten Verzug gemäß der vorliegenden Erfindung aufweisen. Ein thermisch induzierter Verzug 1,5 mm wird in Beispiel 7 alleine durch die Vertiefungen erzielt, unabhängig davon, ob die in den Ausführungsbeispielen 1 oder 3 ergriffenen Maßnahmen durchgeführt werden oder nicht. Dieser Effekt wird verstärkt, wenn zusätzlich die Bedingungen gemäß den Beispielen 1 bzw. 3 eingehalten werden.

Der Vergleich der Ausführungsbeispiele 10 und 11 gegenüber den Vergleichsbeispielen 8, 9, 12 und 13 zeigt wiederum auf, dass das Tempern der thermoplastischen Schaumstoffplatten in einem geheizten Tunnel unter Verwendung von Wasserdampf in einem Temperaturbereich über 80 und unter 110°C ebenfalls zu der erfindungsgemäßen Reduzierung des thermisch induzierten Verzuges führt. Bei den Beispielen 8 bis 13 ist der Plattenkalibrator nicht exakt auf die Düsenmitte zentriert (Abweichung: 3 mm) und die Temperaturdifferenz Platte nach Plattenkalibrator beträgt 7 °C.

Ein sinngemäßer Vergleich kann auch den Ausführungsbeispielen 16 und 17 gegenüber den Vergleichsbeispielen 14, 15, 18 und 19 entnommen werden, wobei dort die Temperung mittels IR-Strahler in einem Bereich über 85 und unter 115 °C funktioniert. Bei den Beispielen 14 bis 19 ist der Plattenkalibrator nicht exakt auf die Düsenmitte zentriert (Abweichung: 3 mm) und die Temperaturdifferenz Platte nach Plattenkalibrator beträgt 7 °C.

## Patentansprüche

1. Thermoplastische Extrusionsschaumstoffplatte, **dadurch gekennzeichnet, dass** der thermisch induzierte Verzug bezogen auf die Dicke der thermoplastischen Extrusionsschaumstoffplatte ≤ 1,5 mm ist.

2. Thermoplastische Extrusionsschaumstoffplatte gemäß Anspruch 1, **dadurch gekennzeichnet, dass** die thermoplastische Extrusionsschaumstoffplatte eine Dicke von 40 bis 400 mm, eine Breite von 0,3 bis 1,2 m und/oder eine Länge von 0,5 bis 2,50 m aufweist, wobei die Länge größer als die Breite und die Breite größer als die Dicke ist.

3. Thermoplastische Extrusionsschaumstoffplatte gemäß Anspruch 2, **dadurch gekennzeichnet, dass** die Plattenunterseite und die Plattenoberseite der thermoplastischen Extrusionsschaumstoffplatte jeweils in einem Abstand von maximal 100 mm Vertiefungen aufweist, wobei die Vertiefungen eine Tiefe von maximal 2 mm haben.

4. Thermoplastische Extrusionsschaumstoffplatte gemäß einem der Ansprüche 1 bis 3, **dadurch gekennzeichnet, dass** der thermisch induzierte Verzug von ≤ 1,5 mm für einen Zeitraum von mindestens einer Woche konstant bleibt.

5. Thermoplastische Extrusionsschaumstoffplatte gemäß einem der Ansprüche 1 bis 4, **dadurch gekennzeichnet, dass** das zur Extrusion verwendete Polymer Polystyrol oder ein aus Styrol hergestelltes Copolymer ist.

6. Thermoplastische Extrusionsschaumstoffplatte gemäß einem der Ansprüche 1 bis 5, **dadurch gekennzeichnet, dass** das zur Extrusion verwendete Polymer zusätzlich mindestens eine Komponente ausgewählt aus einem mineralischen Füllstoff, einem Keimbildner, einem Flammschutzmittel oder einem IR-Absorber enthält.

7. Thermoplastische Extrusionsschaumstoffplatte gemäß Anspruch 6, **dadurch gekennzeichnet, dass** das zur Extrusion verwendete Polymer als IR-Absorber Graphit enthält.

8. Thermoplastische Extrusionsschaumstoffplatte gemäß einem der Ansprüche 1 bis 7, **dadurch gekennzeichnet, dass** die Dichte der thermoplastischen Extrusionsschaumstoffplatte homogen ist.

9. Verfahren zur Herstellung einer thermoplastischen Extrusionsschaumstoffplatte gemäß einem der Ansprüche 1 bis 8, **dadurch gekennzeichnet, dass** bei der Extrusion die Extrusionsdüse und das Kalibrierwerkzeug zentralsymmetrisch zueinander angeordnet sind.

10. Verfahren gemäß Anspruch 9, **dadurch gekennzeichnet, dass** das Kalibrierwerkzeug ein Plattenkalibrator ist und die Abweichung des Plattenkalibrators zur Mitte der Extrusionsdüse ≤ 0,5 mm beträgt.

11. Verfahren zur Herstellung einer thermoplastischen Extrusionsschaumstoffplatte gemäß einem der Ansprüche 1 bis 8, **dadurch gekennzeichnet, dass** bei der Extrusion die Temperaturdifferenz der Plattenunterseite und der Plattenoberseite der thermoplastischen Extrusionsschaumstoffplatte nach Verlassen des Kalibrierwerkzeugs, vorzugsweise des Plattenkalibrators, ≤ 2 °C beträgt.

12. Verfahren zur Herstellung einer thermoplastischen Extrusionsschaumstoffplatte gemäß einem der Ansprüche 1 bis 8, **dadurch gekennzeichnet, dass** bei oder nach der Extrusion die Plattenunterseite und die Plattenoberseite der thermoplastischen Extrusionsschaumstoffplatte jeweils in einem Abstand von maximal 100 mm mit Vertiefungen, die eine Tiefe von maximal 2 mm haben, versehen werden.

13. Verfahren zur Herstellung einer thermoplastischen Extrusionsschaumstoffplatte gemäß einem der Ansprüche 1 bis 8, **dadurch gekennzeichnet, dass** nach der Extrusion die thermoplastische Extrusionsschaumstoffplatte in einem beheizten Tunnel für einen Zeitraum von 0,1 bis 10 Minuten, vorzugsweise für 1 bis 5 Minuten, bei 85 bis 105 °C, vorzugsweise bei 90 bis 100 °C, getempert wird.

14. Verfahren zur Herstellung einer thermoplastischen Extrusionsschaumstoffplatte gemäß Anspruch 13, **dadurch gekennzeichnet, dass** das Tempern im beheizten Tunnel durch Verwendung von Wasserdampf oder Heißluft, vorzugsweise von Wasserdampf, erfolgt.

15. Verfahren zur Herstellung einer thermoplastischen Extrusionsschaumstoffplatte gemäß einem der Ansprüche 1 bis 8, **dadurch gekennzeichnet, dass** nach der Extrusion die thermoplastische Extrusionsschaumstoffplatte von mindestens einem IR-Strahler durch Bestrahlung für einen Zeitraum von 0,1 bis 5 Minuten, vorzugsweise für 0,5 bis 2 Minuten, bei 90 bis 115 °C, vorzugsweise bei 95 bis 105 °C, getempert wird.

16. Verfahren zur Herstellung einer thermoplastischen Extrusionsschaumstoffplatte gemäß Anspruch 15, **dadurch gekennzeichnet, dass** die Plattenoberseite der thermoplastischen Extrusionsschaumstoffplatte von einem ersten IR-Strahler und die Plattenunterseite der thermoplastischen Extrusionsschaumstoffplatte von einem zweiten IR-Strahler synchron getempert werden.
